# EUROPÄISCHE PATENTANMELDUNG

(11) **EP 1 547 692 A1**
(43) Veröffentlichungstag der Anmeldung: **29.06.2005**
(21) Anmeldenummer: 03029067.0
(22) Anmeldetag: 17.12.2003
(51) Int. Cl.: B01L 7/00, H05B 6/80

(54) **Betrieb einer Heizvorrichtung zum Erhitzen von einem in einem Behälter befindlichen Stoff**

(60) Teilanmeldung: 04026318.8
(71) Anmelder: Mikrowellen-Systeme MWS GmbH, 9435 Heerbrugg (CH)
(72) Erfinder: Lautenschläger, Werner, 88299 Leutkirch (DE)
(74) Vertreter: Rupp, Christian, Dipl.Phys.

(57) **Zusammenfassung**

Die Erfindung betrifft ein Verfahren zum Betrieb einer Heizvorrichtung, bei dem wenigstens ein Stoff (6) in wenigstens einem Behälter (5) in einem Heizraum durch Strahlung erwärmt wird. Um die Maßnahme zur Vermischung und/oder Beibehaltung der Vermischung des Stoffes (6) zu vereinfachen, führt der Behälter (5) in dem Heizraum eine periodische Hauptbewegung Ah und zumindest zeitweise gleichzeitig eine der Hauptbewegung Ah überlagerte Schüttelbewegung As aus, wobei die Amplitude Asa, Asb der Schüttelbewegung As kleiner ist als die Amplitude r der Hauptbewegung Ah.

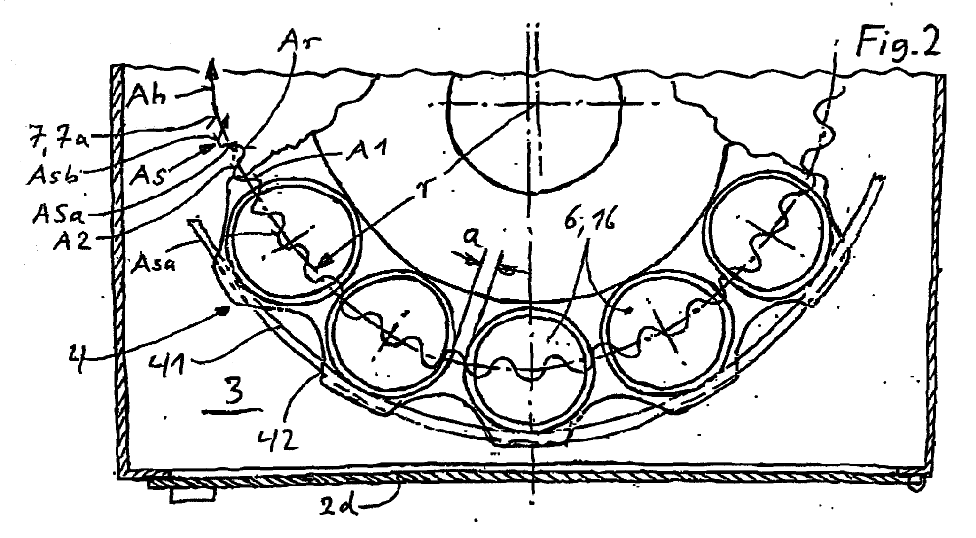

## Beschreibung

Die Erfindung bezieht sich auf ein Verfahren und eine Vorrichtung zum Betrieb einer Heizvorrichtung zum Erhitzen von in einem Behälter befindlichen Stoff.

Es ist zum Erwärmen durch Mikrowellen-Strahlung wenigstens eines sich in einem Behälter befindlichen Stoffes bekannt, den Behälter mit einem Behälter-Träger im Heizraum kreisförmig zu bewegen, um eine gleichmäßige Erwärmung bzw. Erhitzung des Stoffes zu erreichen. Als Träger kann z.B. eine Drehscheibe dienen, auf der sich zur gleichzeitigen Bewegung von mehreren Behältern auf dem Umfang verteilt angeordnete Standplätze für die Behälter befinden. Die Halterung des wenigstens einen Behälters durch den Träger kann jedoch auch auf andere Weise, z.B. hängend, erfolgen.

Um außerdem während des Erwärmungsvorgangs im wesentlichen gleichmäßige Temperatur- und Vermischungszustände im Stoff zu gewährleisten, ist es auch bereits bekannt, in den Behälter einen Magnet-Rührer einzusetzen, der in Rotation versetzt wird, um den Stoff durch Rühren zu vermischen und/oder die Vermischung beizubehalten.

Dazu muss in jedem Behälter ein eigener Rührer eingesetzt und dann angetrieben werden (siehe beispielsweise DE 197 00 499 A1). Ein weiterer Nachteil dieser bekannten Rührer ist es, dass sie in schmalen Behältern (Reagenzglas etc.) nur schwer einführbar sind und dann dazu neigen, sich senkrecht aufzustellen, anstelle die horizontale Lage beizubehalten, die für ein ordnungsgemässes Rühren notwendig ist. Schliesslich ist es hinsichtlich einer Automatisierung von Laborprozessen nahezu unmöglich, derartige Rührer von einem Roboter einzusetzen und dann wieder herausnehmen zu lassen. Schliesslich besteht stets die Gefahr, dass Metallionen aus dem magnetischen Kern des Rührers durch die Kunsstoff-Hülle nach Aussen gelangen und somit eine Verunreinigungsquelle darstellen. Bei einer Sedimentbildung in dem Behälter besteht die Gefahr, dass der Rührer das Sediment nicht mehr auflösen kann und vielmehr lediglich an der Oberfläche des Sediments kratzt.

Der Erfindung liegt die Aufgabe zugrunde, eine Technik vorzustellen, die ein vereinfachtes Mischen von Stoffen ermöglicht.

Diese Aufgabe wird durch die Merkmale der unabhängigen Ansprüche gelöst.

Beim erfindungsgemäßen Verfahren wird gemäss einem ersten Aspekt ein Behälter in einem Heizraum mit einer periodischen Hauptbewegung und darüber hinaus zumindest zeitweise mit einer der Hauptbewegung überlagerten periodischen Schüttelbewegung bewegt, wobei die Amplitude der Schüttelbewegung kleiner ist als die der Hauptbewegung, während die Frequenz der Schüttelbewegung grösser ist als die der Hauptbewegung.

Beim erfindungsgemäßen Verfahren wird der Stoff also während seiner Hauptbewegung zumindest zeitweise geschüttelt. Die Schüttelbewegung erzeugt im Stoff eine Materialbewegung, die einem Rührvorgang ähnlich ist und eine Entmischung unterschiedlicher Stoffe und/oder unterschiedlicher Temperatur verhindert oder wenigstens verringert. Beim erfindungsgemäßen Verfahren bedarf es keines besonderen Rührelements im Behälter, da der Stoff durch die Schüttelbewegung des Behälters zu Bewegungen angeregt wird, die zu den vorbeschriebenen Vorteilen führen.

Es ist vorteilhaft, eine Schüttelbewegung mit quer zur Hauptbewegung gerichteten Komponenten zu erzeugen. Hierbei erzeugt die Schüttelbewegung im Stoff Bewegungen, die quer zu den Massenkräften des Stoffes gerichtet sind, die durch seine Bewegung in die Hauptbewegungsrichtung erzeugt werden. Hierdurch ist die durch die Schüttelbewegung erzeugte Mischbewegung im Stoff besonders intensiv.

Die Hauptbewegung ist eine periodische Bewegung, die regelmäßig oder unregelmäßig zu einem Ausgangspunkt zurückkehrt. Hierbei ist eine Umlaufbewegung besonders vorteilhaft, weil sie eine große Weglänge hat, was wiederum zur Vereinheitlichung der Erwärmung des Stoffes bspw. im Falle einer Erwärmung durch Mikrowellen beiträgt.

Ein besonderer Vorteil des erfindungsgemäßen Verfahrens besteht auch darin, daß dann, wenn die Schüttelbewegung aus hin- und her gerichteten Komponenten besteht, in dem Stoff ebenfalls hin- und her gerichtete Bewegungskomponenten erzeugt werden. Hierbei wird der Stoff nicht gerührt, und die Hin- und Herbewegungen üben eine wirksame Mischfunktion ohne Fliehkraftwirkung auf den Stoff aus. Beim bekannten Verfahren wird dagegen der Stoff ausschließlich gerührt, wodurch im Stoff Fliehkräfte entstehen, die zu einer Entmischung von Stoffanteilen unterschiedlicher Wichte führen. Das erfindungsgemäße Verfahren führt deshalb auch zu einer Verbesserung der auf den Stoff ausübbaren Mischwirkung.

Wenn die Schüttelbewegung durch eine Bewegung auf einer vorzugsweise kreisförmigen Planetenbahn erzeugt wird, werden auf den Stoff nicht nur hin- und hergehende Schüttelbewegungskomponenten ausgeübt, sondern gleichzeitig auch in Umfangsrichtung gerichtete Drehbewegungskomponenten, wobei zusätzlich zu den im Stoff hin- und her wirksamen Komponenten gleichzeitig Drehkomponenten und somit eine überlagerte Rührwirkung erzeugt wird. Hierdurch wird die Mischfunktion weiter intensiviert, wobei aufgrund der gleichzeitig wirksamen hin- und hergehenden Komponenten schädliche Fliehkräfte vermieden werden.

Wenn die Schüttelbewegung Komponenten aufweist, die bezüglich einer umlaufenden oder kreisförmigen Hauptbewegung quer gerichtet sind, ist es vorteilhaft, den wenigstens einen Träger durch einen von außerhalb des Heizraums wirksamen Magnetantrieb zu bewegen. Bei einem solchen Antrieb kann der Träger gleichzeitig die quer gerichteten Schüttelbewegungskomponenten ausführen, da solche Querbewegungen der Magnetantrieb zuläßt.

Bei einer vorliegenden Heizvorrichtung ist ein Bewegungsantrieb für den Träger des wenigstens einen Behälters problematisch, weil die Teile eines im Heizraum angeordneten Bewegungsantriebs durch die Strahlung ebenfalls erwärmt werden, wenn sie aus die Strahlung absorbierendem Material bestehen. Eine Fertigung dieser Teile aus die Bestrahlung nicht absorbierendem Material ist jedoch nicht sinnvoll oder auch nicht möglich. Man ist deshalb dazu übergegangen, den Bewegungsantrieb für die Hauptbewegung unter dem Gehäuse anzuordnen und die Bodenwand des Gehäuses mit Antriebselementen, z.B. eine Welle, in einem Durchführungsloch zu durchgreifen und antriebsmäßig mit dem Träger zu verbinden. Dies führt zu einer aufwendigen Konstruktion und ist dann erschwert oder kaum möglich, wenn für diesen Bewegungsdurchgriff durch die Bodenwand nur ein beengter Raum zur Verfügung steht.

Der Erfindung liegt deshalb im weiteren die Aufgabe zugrunde, bei einer Vorrichtung der im Oberbegriff des Anspruchs 15 angegebenen Art den Bewegungsantrieb raumgünstiger und/oder flexibler zu gestalten.

Diese Aufgabe wird durch die Merkmale des Anspruchs 15 gelöst.

Bei dieser erfindungsgemäßen Ausgestaltung ist der Träger durch einen magnetischen Durchgriff bewegbar, der wenigstens einen Antriebsmagneten aufweist, der außerhalb des Gehäuses angeordnet und auf einer der Bewegungsbahn des Trägers im wesentlichen entsprechenden Bewegungsbahn bewegbar gelagert ist. Bei dieser erfindungsgemäßen Ausgestaltung bedarf es keiner starren Verbindung mit dem Träger und deshalb auch keines mechanischen Durchgriffs durch die Bodenwand des Gehäuses. Ein weiterer Vorteil dieser erfindungsgemäßen Ausgestaltung besteht darin, daß der Magnetantrieb Abweichungen (Schlupf) zwischen den Bewegungsbahnen des Trägers und des Antriebsmagneten zuläßt. Hierdurch läßt sich die Konstruktion der Vorrichtung vereinfachen, und es entstehen keine Zwängungen beim Bewegungsablauf, wie es bei einem mechanischen Antrieb der Fall wäre. Außerdem läßt der magnetische Antrieb eine von der Hauptbewegungsrichtung abweichende Schüttelbewegung in einfacher Weise zu, und er eignet sich deshalb insbesondere für einen solchen Antrieb mit überlagerter Schüttelbewegung.

Die erfindungsgemäße Ausgestaltung ermöglicht es auch im weiteren einen Antrieb, z.B. einen Elektroantrieb in einfacher Weise außerhalb des Gehäuses anzuordnen und antriebsmäßig mit dem Antriebsmagneten zu verbinden, um diesen zu bewegen.

Um eine nicht einseitig auf die Lager wirkende Antriebskraft zur Verfügung zu stellen, ist es vorteilhaft, am Magnethalter und am Träger jeweils wenigstens zwei oder mehrere einander in der Ebene der Bewegungsbahn gegenüberliegend angeordnete Magnete auf der Bewegungsbahn verteilt anzuordnen, insbesondere jeweils in einen Teilkreis bei einem Drehantrieb. Wenn diese Magnetpaare jeweils mit unterschiedlicher Polung angeordnet sind, ergibt sich eine für eine Automatisierung günstige Positionskodierung.

Die Erfindung umfaßt weitere Weiterbildungsmerkmale, die eine kleine, kostengünstig herstellbare und dabei sicher funktionierende Konstruktion ermöglichen. Andere Weiterbildungsmerkmale betreffen einen Wärmeschutz für zusätzliche, die Bodenwand des Gehäuses von unten durchgreifende Antriebselemente, insbesondere eine exzentrische Welle für eine Schüttelbewegung.

Nachfolgend werden das erfindungsgemäße Verfahren und die erfindungsgemäße Vorrichtung anhand von.vorteilhaften Merkmalen wenigstens eines Ausführungsbeispiels und anhand von Zeichnungen näher erläutert. Es zeigt:
- Fig. 1: eine erfindungsgemäße Heizvorrichtung zum Erhitzen von einem in wenigstens einem Behälter befindlichen Stoff im vertikalen Schnitt;
- Fig. 2: einen Teil der Vorrichtung im horizontalen Schnitt gem. Linie II-II in Fig. 1.

Die Hauptteile der in ihrer Gesamtheit mit 1 bezeichneten Heizvorrichtung sind ein Gehäuse 2 mit einer im wesentlichen horizontalen und ebenen Bodenwand 2a, einer Umfangswand 2b sowie einer im wesentlichen horizontalen und z.B. ebenen Deckenwand 2c, die zusammen eine geschlossene Heizkammer 3 umgeben, die durch eine wahlweise zu öffnende und zu verschließende Tür 2d von außen zugänglich ist. Im Bodenbereich der Heizkammer 3 ist wenigstens ein Träger 4 für einen oder mehrere Behälter 5 für einen mit Wärme zu behandelnden Stoff 6 beweglich gelagert.

Der Träger 4 und somit die mit ihm bewegunsfesten Behälter 5 können in der Heizkammer 3 eine Bewegung ausführen, die sich aus einer Hauptbewegung Ah und einer der Hauptbewegung Ah überlagerten Schüttelbewegung As zusammensetzt. Die Hauptbewegung Ah ist periodisch und umfaßt wenigstens zwei gleiche oder ungleiche Bewegungsabschnitte, auf denen der Träger 4 regelmäßig oder unregelmäßig zu einem Ausgangspunkt wiederkehrt. Die Hauptbewegungsrichtung ist mit 7 bezeichnet. Beim Ausführungsbeispiel ist die Hauptbewegung Ah eine umlaufende Bewegung, vorzugsweise eine auf einer Kreislinie umlaufende Umlaufbewegung, und kann somit durch eine um eine im wesentlichen vertikal verlaufende Drehachse verlaufende Drehung oder Hin- und Herbewegung des Trägers 4 erreicht werden. Alternativ kann die Hauptbewegung bspw. auch eine translatorische Hin- und Herbewegung sein. Die die resultierende Bewegung Ar erzeugende Bewegungsvorrichtung ist in ihrer Gesamtheit mit 10 bezeichnet.

Im Falle einer Erwärmung durch Mikrowellen ist die Hauptbewegung derart gewählt, daß jeder Behälter während der Zeitdauer der Behandlung solche Bereiche unterschiedlicher Strahlungsintensität durchläuft. Die Schüttelbewegung As ist beim Ausführungsbeispiel eine periodische zickzackförmige oder schlangenförmige Bewegung, deren wenigstens abschnittsweise quer zur Hauptbewegungsrichtung 7 verlaufende Querkomponenten Asa, Asb die Amplituden A1, A2 aufweisen und eine zugehörige Abszisse, hier die Kreislinie 7a, kreuzen. Die Amplituden At der Schüttelbewegung As sind kleiner als die Amplitude der Hauptbewegung Ah, die bei einer Kreisbewegung dem Radius r entspricht.

Die Frequenz der Schüttelbewegung ist grösser als die der Hauptbewegung.

Es ist der Zweck der Schüttelbewegung As, das insbesondere flüssige oder fließfähige Material 6 im Behälter 5 im Funktionsbetrieb der Vorrichtung 1 in Bewegung zu halten, um z.B. eine Sedimentation zu vermeiden und eine Vermischung des Stoffes 6 zu gewährleisten.

Es ist zur Steigerung der Leistungsfähigkeit der Vorrichtung 1 vorteilhaft, mehrere Träger 4 vorzusehen, die auf der Hauptbewegungsbahn verteilt angeordnet sind. Beim Ausführungsbeispiel sind mehrere Träger 4 auf der Kreislinie 7a verteilt angeordnet, wobei der Träger 4 durch eine Scheibe 4a oder einen Ring gebildet sein kann.

Eine kreisförmige Hauptbewegung Ah läßt sich wie gesagt in konstruktiv einfacher und raumsparender Weise dadurch erreichen, daß der Träger 4 in einem ersten Drehlager 12 um eine erste vorzugsweise im wesentlichen vertikale Drehachse 12a drehbar gelagert ist. Ein noch zu beschreibender zugehöriger Antrieb ist mit 8 bezeichnet.

Die Schüttelbewegung As läßt sich in einfacher Weise dadurch erreichen, daß der wenigstens eine Träger 4 quer zur Hauptbewegung hin und her bewegt wird. Die Frequenz dieser Schüttelbewegung As beträgt ein mehrfaches der Drehzahl des Trägers 4 um die Drehachse 12a. Die Frequenz kann z.B. wenigstens das zehnfache oder mehr der Drehzahl betragen.

Beim Ausführungsbeispiel wird die Schüttelbewegung As dadurch erzeugt, daß der Träger 4 auf einer vorzugsweise kreisförmigen Planetenbahn bewegt wird, insbesondere dadurch, daß der Träger 4 mit seiner Drehachse 12a auf einer vorzugsweise kreisförmigen Planetenbahn bei seiner Hauptbewegung Ah gleichzeitig um eine zur Drehachse 12a exzentrische Drehachse 13a eines zweiten Drehlagers 13 bewegt wird. Dies wird in vorteilhafter Weise dadurch erreicht, daß die Lagerachse des ersten Drehlagers 12 eine Welle ist, die um die exzentrische Drehachse 13a drehbar gelagert ist. Das Exzenter-Mass stellt in diesem Fall die Amplitude der Schüttelbewegung dar.

Eine räumlich günstige Lagerstelle für das zweite Drehlager 13 ist unterhalb des Gehäuses 2. Die Welle 12b kann dabei in einfacher Weise die Bodenwand 2a nach unten in einem Loch 2e durchfassen und mit dem Schüttelbewegungs-Antrieb 9 in Verbindung stehen. Das zweite Drehlager 13 kann somit in diesen zweiten Antrieb 9 integriert sein.

Die Frequenz der Schüttelbewegung As ist so groß, daß auf den im Behälter 5 befindlichen Stoff 6 eine Schüttelbewegung ausgeübt wird, aufgrund der der Stoff 6 sich im Behälter 5 hin- und her verlagert und somit eine Durchmischung erfährt. Wenn die zweite Bewegung 7b eine Kreisbewegung ist, wird darüber hinaus eine Rührbewegung des Stoffes 6 erzeugt.

Es ist außerdem vorteilhaft, den Träger 4 zur Ausführung seiner Hauptbewegung Ah mittels eines magnetischen Durchgriffs 8 durch die Heizraumwand anzutreiben. Zum einen ist es dadurch möglich, einen zugehörigen Antriebsmotor sowie einen Antriebsmagneten außerhalb des Gehäuses 2 anzuordnen, wobei die elektromagnetischen Antriebskräfte durch die Wand des Gehäuses 2 hindurch wirksam sind. Hierdurch ist es möglich, die Mehrzahl der den Antrieb bildenden Teile außerhalb vom Gehäuse 2 anzuordnen, wo sie der Wärme der Heizkammer 3 weitgehend entzogen sind und so ein größerer Bauraum zur Verfügung steht.

Ein weiteren Vorteil eines magnetischen Antriebs besteht darin, daß er aufgrund des Fehlens einer starren Verbindung zwischen den Antrieb 8 und dem Träger 4 Schlupf und insbesondere die quer zur Hauptbewegungsrichtung 7 verlaufenden Querbewegungen bzw. Schüttelbewegung As gestattet.

Beim vorliegenden Ausführungsbeispiel ist ein Träger 4 vorgesehen, der in dem ersten Drehlager 12 um die Drehachse 12a drehbar gelagert ist und auf beiden Seiten der Drehachse 12a und auf seinem Umfang verteilt mehrere Stellplätze 15 für vorzugsweise einander gleich ausgebildete Behälter 5 aufweist. Es können auf einem Teilkreis in einem geringen Abstand a voneinander angeordnete Behälter 5 vorgesehen sein, z.B. bis etwa 14 Behälter.

Der Behälter 5 kann durch ein im Querschnitt vorzugsweise rundes, oberseitig offenes Gefäß 16 gebildet sein, das mit einem Standfuß auf dem zugehörigen Stellplatz 15 steht. Der Behälter 5 kann aber auch mit geringem Bewegungsspiel in einem Aufnahmeloch 17 sitzen, das in einem den Träger 4 bildenden Trägerbasisteil 18 angeordnet ist, daß z.B. ein hochstehendes Rohr des Trägers 4 sein kann oder eine hochstehende und sich in der Umfangsrichtung durchgehend erstreckende Ringwand sein kann. Das Basisteil 18 ist z.B. speichenförmig oder durch eine Scheibe 4a mit einer Nabe 21 verbunden, in der das erste Drehlager 12 ausgebildet ist. Dieses kann ein Gleit- oder Wälzlager 22 sein, das zwischen der Nabe 21 und einer Achse oder Welle 12b angeordnet ist, die sich vom Drehlager 12 nach unten mit Bewegungsspiel durch das Loch 2e in der Bodenwand 2a und einer Lagerbuchse 25 für ein drittes Drehlager 13 für den Magnet-Antrieb 8 erstreckt. Das dritte Drehlager 13 ist beim Ausführungsbeispiel unter der Bodenwand 2a angeordnet ist, wobei die Lagerbuchse 25 an der Bodenwand 2a befestigt ist und von dieser nach unten absteht. Das Basisteil 18 bzw. die Scheibe 4a weist einen vertikalen Abstand b von der Bodenwand 2a oder einer darauf liegenden Platte 2f auf.

Beim Ausführungsbeispiel ist der Hauptbewegungs-Antrieb 8 für den Träger 4 der magnetische Bewegungsantrieb mit wenigstens zwei Magneten 26a, 26b, von denen der erste Magnet 26a am Träger 4 angeordnet ist und der zweite Magnet 26b als Antriebsmagnet der vorzugsweise kreisförmigen Umlaufbahn des ersten Magneten 26a gegenüberliegend an einem außerhalb des Gehäuses 2 angeordneten Antriebsdrehteil 27 angeordnet ist, das in einem dritten Drehlager 14 um eine Drehachse 14a drehbar ist, die im Bereich der Drehachsen 12a und 13a etwa vertikal verläuft, z.B. koaxial mit der Drehachse 13a des zweiten Drehlagers 13. Das Antriebsdrehteil 27 weist eine Nabe 29 auf, die vorzugsweise nach unten absteht und durch ein Gleitlager oder Wälzlager 14b auf der Lagerbuchse 25 drehbar gelagert ist. Auch das Antriebsdrehteil 27 ist scheibenförmig ausgebildet, z.B. mit einer etwa horizontalen Scheibe 32, die mit dem oberen Rand der Nabe 29 verbunden ist und von dieser in Form eines Flansches radial absteht.

Die Magnete 26a, 26b sind vorzugsweise Flachmagnete, wobei wenigstens das eine Magnet 26a an der Unterseite des Trägers 4 oder Trägerbasisteils 18 oder der Scheibe 4a angeordnet ist, vorzugsweise darin eingebettet und durch eine unterseitige Materialschicht 4b abgedeckt sein kann. Das zweite Magnet 26b bzw. Antriebsmagnet ist an der Oberseite des Antriebdrehteils 27 angeordnet und vorzugsweise darin versenkt, wobei ihre Oberseiten miteinander abschließen können. Der vorzugsweise vertikale Abstand c zwischen den Magneten 26a, 26b beträgt insbesondere weniger als etwa 15 mm, z.B. etwa 5 mm.

Das Antriebsdrehteil 27 ist durch einen Elektromotor 33 antreibbar, der antriebsmäßig mit dem Antriebsdrehteil 27 verbunden ist, z.B. durch miteinander hämmernde Zahnräder 34a, 34b, von denen das eine auf einer Antriebswelle 35 des Motors 33 sitzt und ein Ritzel sein kann, das mit einem das Zahnrad 34b bildendenden Zahnkranz kämmen kann, der unterseitig mit dem Antriebsdrehteil 27 und/oder mit der Lagerbuchse 29 verbunden ist.

Der zweite Bewegungsantrieb 9 weist einen Elektromotor 36 auf, der die Welle 12b z.B. dadurch antreibt, daß sie mit der Abtriebswelle 37 des Motors 36 verbunden ist. Hierzu kann die Welle 12b ein bezüglich der zweiten Drehachse 13a koaxiales Aufnahmeloch 38 aufweisen, mit dem sie auf der Abtriebswelle 37 sitzt und damit drehfest verbunden ist, z.B. durch eine Keil-Verbindung. Der das erste Drehlager 12 bildende Lagerkopf 12c ist bezüglich der Welle 12b um die Exzentrizität e der Drehachsen 12a, 13a exzentrisch angeordnet. Der Elektromotor 36 kann z.B. an der Lagerbuchse 25 befestigt sein.

Im Rahmen der Erfindung können zwei Magnete 26a, 26b ausreichen, um eine magnetische Mitnahmekraft zu erzeugen, die so groß ist, daß bei einer Rotation des Antriebsdrehteils 27 der Träger 4 in der Hauptbewegungsrichtung 7 mitgenommen wird. Um die Mitnahmekraft zu vergrößern, ist es vorteilhaft, mehrere, z.B. wenigstens zwei Magnete 26a, 26b auf dem Umfang verteilt anzuordnen, wodurch mehrere auf dem Umfang verteilt angeordnete Angriffspunkte für die Mitnahmekraft geschaffen werden. Die Magnete 26a,26b, z.B. Permanentmagnete wie Neodym-Magnete, weisen jeweils eine umgekehrte Polarität auf. Wenn somit das antreibende Antriebsteil 27 gedreht wird, nehmen diese mittels der magnetischen Mitnahmekraft den Träger 4 mit dem oder den Behältern 5 mit.

Beim Ausführungsbeispiel mit mehreren, z.B. zwei segmentförmigen Magneten 26a, 26b erfolgt mittels der Polarität der Magnete eine Positionscodierung. Indem jeweils der eine Magnet 26a eine Süd- und der andere Magnet 26b eine Nord-Polarität S, N aufweist, und gleiches auch für die wenigstens zwei Magnete 26a des Trägers 4 gilt, wird sich bei Beginn des Drehvorgangs das Antriebsdrehteil 27 solange drehen, bis sich der Nord-Magnet des Trägers 4 im wesentlichen unterhalb des Süd-Magneten des Antriebsdrehteils 27 befindet und somit gleichzeitig auch der Süd-Magnet des Antriebsdrehteils 27 sich im wesentlichen unterhalb des Nord-Magneten des Trägers 4 befindet. Das Vorsehen von jeweils zwei Magneten 26a, 26b hat indessen den Vorteil, daß die axialen Kräfte ausgeglichen sind und somit das dritte Drehlager 14 weniger belastet ist.

Die Heizvorrichtung 1 ist vorzugsweise eine Mikrowellen-Heizvorrichtung, bei der zur Erzeugung der angestrebten Wärme in der Heizkammer 3 durch einen Generator 42 erzeugte Mikrowellen in die Heizkammer 3 eingekoppelt werden.

Für einen Funktionsbetrieb wird wenigstens der erste Bewegungsantrieb 8 eingeschaltet, der den Träger 4 bzw. das oder die von ihm getragenen Behälter 5 auf der Bewegungsbahn in der Hauptbewegungsrichtung 7 bewegt, die vorzugsweise kreisförmig ist und den wenigstens einen Behälter 5 umlaufend durch die Heizkammer 3 bewegt. Hierdurch wird eine gleichmäßige Beaufschlagung des Stoffes 6 mit Mikrowellen und somit eine gleichmäßige Erhitzung des Stoffes 6 erreicht. Die Heizvorrichtung 1 ist somit funktionsfähig, um Gemische oder physikalische Prozesse im Material 6, z.B. Probematerial, auszulösen und/oder zu fördern.

Gleichzeitig wird der Träger 4 mit seiner Drehachse 12a durch den zweiten Bewegungsantrieb 9 auf einer vorzugsweise kreisförmigen Planetenbahn um die Drehachse 13a bewegt, wodurch aufgrund der Exzentrizität e die quer zur Hauptbewegungsrichtung 7 gerichteten Amplitudenbewegungen Asa, Asb erzeugt werden. Die Frequenz bzw. Drehzahl oder Geschwindigkeit der Schüttelbewegung As ist so groß, daß bei dem Entfernen und wieder Nähern eine hin- und hergehende Fliehkraft auf den Stoff 6 ausgeübt wird, die so groß ist, daß der Stoff 6 sich im Behälter 5 hin- und her bewegt, was zu einer Vermischung des Materials beiträgt. Die Welle 12b wird durch eine entsprechend hohe Drehzahl angetrieben. Im Funktionsbetrieb wird der Träger 4 nicht nur um die erste Drehachse 12a gedreht, sondern diese Drehachse 12a wird gleichzeitig mit höherer Frequenz bzw. Drehzahl um die zweite Drehachse 13a gedreht. Der Träger 4 führt dabei eine vorzugsweise kreisförmige Planetenbewegung und gleichzeitig eine überlagerte Exzenterbewegung aus, die nicht nur zu der Schüttelbewegung As, sondern auch aufgrund der Drehung eine in der Umfangsrichtung des Behälters 5 gerichteten Rührbewegung im Stoff 6 erzeugt.

Die Exzentrizität e ist klein und beträgt weniger als etwa 5 mm, z.B. 1 mm bis 2 mm. (Die Amplitude der Hauptbewegung liegt im Vergleich dazu in einem Bereich von wenigstens einigen Zentimetern).

Die Drehzahl des Trägers 4 bezüglich der Drehachse 12a beträgt beispielsweise zwischen 1 und 30 U/min. Bei der Exzenter-Drehung kann die Drehzahl beispielsweise zwischen etwa 20 und 2000 U/min liegen.

Die sich in der Heizkammer 3 befindlichen Teile der Vorrichtung 1, die durch die Mikrowellen-Bestrahlung nicht erhitzt werden sollen, wie z.B. der oder die Behälter 5 sowie die Trag- und Antriebsteile, bestehen aus für Mikrowellen durchlässigem Material, insbesondere Kunststoff.

Um für das erste Drehlager 12 Metall, z.B. ein Wälzlager, verwenden zu können, weist die Scheibe 4a in ihrem mittleren Bereich ein Scheibenteil 4c aus Metall, z.B. Stahl, auf, an bzw. in dem das Drehlager 12 angeordnet ist und an dem der äußere Scheibenteil befestigt ist und z.B. auf einem unteren Flansch 4d des Scheibenteils 4c aufliegt. Das Scheibenteil 4c schirmt das Drehlager 12 vor der Bestrahlung ab.

Zur Sicherung der Behälter 5 kann ein sie mit einer kleinen Zugspannung umringendes Band 41 vorgesehen sein, das z.B. in Nuten 42 im Trägerbasisteil 18 angeordnet ist, die die Wand so tief durchsetzen, daß das Band 41 gegen die Behälter 5 drückt.

## Patentansprüche

1. Verfahren zum Betrieb einer Heizvorrichtung (1), bei dem wenigstens ein Behälter (5) in einem Heizraum erwärmt wird, wobei
- der Behälter (5) in dem Heizraum eine periodische Hauptbewegung (Ah) und zumindest zeitweise gleichzeitig eine der Hauptbewegung (Ah) überlagerte Schüttelbewegung (As) ausführt, wobei
- die Amplitude (Asa, Asb) der Schüttelbewegung (As) kleiner ist als die Amplitude (r) der Hauptbewegung (Ah) und die Frequenz der Schüttelbewegung grösser ist als die der Hauptbewegung.

2. Verfahren nach Anspruch 1,
**dadurch gekennzeichnet,**
**daß** die Schüttelbewegung (As) Komponenten (A1, A2) aufweist, die quer zur Hauptbewegung (Ah) gerichtet sind.

3. Verfahren nach Anspruch 1 und 2,
**dadurch gekennzeichnet,**
**daß** die Hauptbewegung (Ah) eine umlaufende Bewegung ist, insbesondere eine kreisförmige Bewegung.

4. Verfahren nach Anspruch 2 und 3,
**dadurch gekennzeichnet,**
**daß** die Hauptbewegung (Ah) und die Schüttelbewegung (As) eine resultierende Bewegung (Ar) ergeben, die zickzackförmig oder schlangenförmig in die Hauptbewegungsrichtung (7) verläuft.

5. Verfahren nach einem der vorhergehenden Ansprüche,
**dadurch gekennzeichnet,**
**daß** die Schüttelbewegung (As) eine umlaufende Bewegung, insbesondere eine Kreisbewegung, ist.

6. Verfahren nach Anspruch 5,
**dadurch gekennzeichnet,**
**daß** die Schüttel-Kreisbewegung mittels eines Exzenterantriebs (9) erfolgt.

7. Verfahren nach einem der vorhergehenden Ansprüche,
**dadurch gekennzeichnet,**
**daß** die Hauptbewegung (Ah) durch einen magnetischen Durchgriff durch eine Wand des Heizraums hindurch erfolgt.

8. Vorrichtung zum Erwärmen wenigstens eines Stoffes (6) in einem Behälter, mit
- einem Gehäuse (2), das eine Heizkammer (3) definiert,
- wenigstens einem Träger (4) für einen Behälter (5) zur Aufnahme des Stoffes (6)
- und einer Bewegungsvorrichtung (10) zum Bewegen des Trägers (4) mit einer periodischen Hauptbewegung (Ah) in einer Hauptbewegungsrichtung (7) in der Heizkammer (3),
**dadurch gekennzeichnet,**
**daß** die Bewegungsvorrichtung (10) den Träger (4) mit einer der Hauptbewegung (Ah) überlagerten Schüttelbewegung (As) schüttelt, wobei die Amplitude (Asa, Asb) der Schüttelbewegung (As) kleiner ist als die Amplitude (r) der Hauptbewegung (Ah).

9. Vorrichtung nach Anspruch 8,
**dadurch gekennzeichnet,**
**daß** mehrere Träger (4) auf der Hauptbewegungsbahn verteilt angeordnet sind.

10. Vorrichtung nach Anspruch 9,
**dadurch gekennzeichnet,**
**daß** der oder die Träger (4) in einem Drehlager (12) mit einem im wesentlichen vertikalen Drehachse (12a) drehbar gelagert ist bzw. sind.

11. Vorrichtung nach einem der vorhergehenden Ansprüche 8 bis 10,
**dadurch gekennzeichnet,**
**daß** die Bewegungsvorrichtung (10) den oder die Träger (4) während der Hauptbewegung (Ah) mit quer zur Hauptbewegungsrichtung (7) hin- und her verlaufenden Komponenten der Schüttelbewegung (As) bewegt.

12. Vorrichtung nach Anspruch 11,
**dadurch gekennzeichnet,**
**daß** der oder die Träger (4) auf einer insbesondere kreisförmigen Planetenbahn um eine bezüglich der ersten Drehachse (12a) exzentrischen zweiten Drehachse (13a) drehbar gelagert ist.

13. Vorrichtung nach einem der vorhergehenden Ansprüche 8 bis 12,
**dadurch gekennzeichnet,**
**daß** zum Antrieb der Hauptbewegung (Ah) und der Schüttelbewegung (As) zwei Antriebe (8, 9) vorgesehen sind, die vorzugsweise unter dem Gehäuse (2) angeordnet sind und von denen wenigstens ein antrieb (9) mit Antriebsmitteln eine Bodenwand (2a) des Gehäuses (2) durchfaßt.

14. Vorrichtung nach einem der vorhergehenden Ansprüche 8 bis 13,
**dadurch gekennzeichnet,**
**daß** zum Bewegen des wenigstens einen Trägers (4) ein Magnetantrieb (8a) vorgesehen ist mit einem Antriebsmagneten (26b), der außerhalb des Gehäuses (2) an einem Magnethalter angeordnet ist und entsprechend der Bewegungsbahn der Hauptbewegung (Ah) bewegbar ist.

15. Vorrichtung zum Erwärmen wenigstens eines Stoffes (6) in einer Heizkammer (3) durch Strahlung, mit
- einem Gehäuse (2), das die Heizkammer (3) umschließt,
- wenigstens einem Träger (4) für wenigstens einen Behälter (5) zur Aufnahme des Stoffes (6)
- und einer Bewegungsvorrichtung (10) zum Bewegen des Trägers (4) mit einer periodischen Hauptbewegung (Ah) in der Heizkammer (3),
**dadurch gekennzeichnet,**
**daß** zum Bewegen des wenigstens einen Trägers (4) dieser magnetische Abschnitte aufweist und ein Magnetantrieb (8a) vorgesehen ist mit einem Antriebsmagneten (26b), der außerhalb des Gehäuses (2) an einem Magnethalter angeordnet ist und entsprechend der Bewegungsbahn der Hauptbewegung (Ah) bewegbar ist.

16. Vorrichtung nach einem der Ansprüche 8 bis 15,
**dadurch gekennzeichnet,**
**daß** die Hauptbewegung (Ah) eine umlaufende Bewegung, insbesondere eine kreisförmige Bewegung, ist.

17. Vorrichtung nach einem der Ansprüche 8 bis 16,
**dadurch gekennzeichnet,**
**daß** die Schüttelbewegung (As) Komponenten (A1, A2) aufweist, die quer zur Hauptbewegung (Ah) gerichtet sind.

18. Vorrichtung nach Anspruch 16 und 17,
**dadurch gekennzeichnet,**
**daß** die Hauptbewegung (Ah) und die Schüttelbewegung (As) eine resultierende Bewegung (Ar) ergeben, die zickzackförmig oder schlangenförmig in die Hauptbewegungsrichtung (7) verläuft.

19. Vorrichtung nach einem der Ansprüche 8 bis 18,
**dadurch gekennzeichnet,**
**daß** die Schüttelbewegung (As) eine umlaufende Bewegung, insbesondere eine Kreisbewegung, ist.

20. Vorrichtung nach Anspruch 19,
**dadurch gekennzeichnet,**
**daß** die Schüttel-Kreisbewegung mittels eines Exzenterantriebs erfolgt.

21. Vorrichtung nach einem der Ansprüche 8 bis 15,
**dadurch gekennzeichnet,**
**daß** am Magnethalter und am Träger (4) jeweils ein oder mehrere Magnete (26a, 26b) einander gegenüberliegend auf der Bewegungsbahn der Hauptbewegung (Ah) verteilt angeordnet sind.

22. Vorrichtung nach einem der Ansprüche 7 und 15 bis 21,
**dadurch gekennzeichnet,**
**daß** der oder die Magnete (26a, 26b) Flachmagnete sind.

23. Vorrichtung nach einem der vorhergehenden Ansprüche 7 und 15 bis 22,
**dadurch gekennzeichnet,**
**daß** wenigstens der Träger (4) oder auch der Magnethalter um eine im wesentlichen vertikale Drehachse (12a, 13a) drehbar gelagert sind.

24. Vorrichtung nach einem der vorhergehenden Ansprüche 15 bis 23,
**dadurch gekennzeichnet,**
**daß** die Bewegungsvorrichtung (10) den Träger (4) mit einer der Hauptbewegung (Ah) überlagerten Schüttelbewegung (As) schüttelt.

25. Verfahren zum Erwärmen wenigstens eines Stoffes (6) in einer Heizkammer (3) durch Strahlung,
wobei der Stoff in wenigstens einem Behälter vorliegt, der in der Heizkammer (3) bewegt wird,
**dadurch gekennzeichnet,**
**daß** der Behälter mittelbar oder unmittelbar durch magnetischen Durchgriff durch eine Begrenzungswand der Heizkammer bewegt wird.

## Geänderte Patentansprüche

### Geänderte Patentansprüche gemäss Regel 86(2) EPÜ.

**1.** Verfahren zum Betrieb einer Mikrowellen-Heizvorrichtung (1), bei dem wenigstens ein Stoff in wenigstens einem Behälter (5) in einem Mikrowellen-Heizraum durch Strahlung erwärmt wird, wobei der Behälter (5) während der Einstrahlung der Mikrowelle in dem Heizraum eine definierte Schüttelbewegung (As) ausführt.

**2.** Verfahren nach Anspruch 1,
**dadurch gekennzeichnet,**
**dass** die Schüttelbewegung einer Hauptbewegung überlagert ist.

**3.** Verfahren nach Anspruch 2,
**dadurch gekennzeichnet,**
**daß** die Schüttelbewegung (As) Komponenten aufweist, die quer zur Hauptbewegung (Ah) gerichtet sind.

**4.** Verfahren nach Anspruch 2 oder 3,
**dadurch gekennzeichnet,**
**daß** die Hauptbewegung (Ah) eine umlaufende Bewegung ist, insbesondere eine kreisförmige Bewegung.

**5.** Verfahren nach einem der Ansprüche 2 bis 4,
**dadurch gekennzeichnet,**
**daß** die Hauptbewegung (Ah) und die Schüttelbewegung (As) eine resultierende Bewegung (Ar) ergeben, die zickzackförmig oder schlangenförmig in die Umlaufrichtung verläuft.

**6.** Verfahren nach einem der vorhergehenden Ansprüche,
**dadurch gekennzeichnet,**
**daß** die Schüttelbewegung (As) eine umlaufende Bewegung, insbesondere eine Kreisbewegung, ist.

**7.** Verfahren nach Anspruch 6,
**dadurch gekennzeichnet,**
**daß** die Schüttel-Kreisbewegung mittels eines Excenterantriebs erfolgt.

**8.** Verfahren nach einem der Ansprüche 2 bis 7,
**dadurch gekennzeichnet,**
**daß** die Hauptbewegung (Ah) durch einen Magnetantrieb und mittels einer magnetischen Kraftwirkung durch eine Wand des Heizraums hindurch erfolgt.

**9.** Vorrichtung zum Erwärmen wenigstens eines Stoffes durch Strahlung, mit
- einem Gehäuse (2), das eine von außen zugängliche Heizkammer (3) umschließt,
- wenigstens einem Träger (4) für einen Behälter (5) zur Aufnahme des Stoffes
- und einer Bewegungsvorrichtung zum Bewegen des Trägers (4) in der Heizkammer (3),
**dadurch gekennzeichnet,**
**daß** die Bewegungsvorrichtung den Träger (4) mit einer Schüttelbewegung (As) schüttelt.

**10.** Vorrichtung nach Anspruch 9,
**dadurch gekennzeichnet,**
**dass** die Bewegungsvorrichtung den Träger weiterhin in einer der Schüttelbewegung überlagerten Hauptbewegung bewegt, wobei die Amplitude der Hauptbewegung grösser ist als die der Schüttelbewegung.

**11.** Vorrichtung nach einem der vorhergehenden Ansprüche 9 oder 10,
**dadurch gekennzeichnet,**
**daß** mehrere Träger (4) auf der Umlaufbahn verteilt angeordnet sind.

**12.** Vorrichtung nach Anspruch 11,
**dadurch gekennzeichnet,**
**daß** der oder die Träger (4) in einem Drehlager (12) mit einem im wesentlichen vertikalen Drehachse (12a) drehbar gelagert ist bzw. sind.

**13.** Vorrichtung nach einem der vorhergehenden Ansprüche 10 bis 12,
**dadurch gekennzeichnet,**
**daß** die Bewegungsvorrichtung den oder die Träger (4) während der Hauptbewegung (Ah) mit quer zur Hauptbewegungsrichtung (7) hin- und her verlaufenden Komponenten der Schüttelbewegung (As) bewegt.

**14.** Vorrichtung nach Anspruch 13,
**dadurch gekennzeichnet,**
**daß** der oder die Träger um eine bezüglich der ersten Drehachse (12a) exzentrischen zweiten Drehachse (13a) drehbar gelagert ist.

**15.** Vorrichtung nach einem der Ansprüche 10 bis 14,
**dadurch gekennzeichnet,**
**daß** zum Bewegen des wenigstens eines Trägers (4) ein Magnetantrieb vorgesehen ist, mit einem Antriebsmagneten (26b), der außerhalb des Gehäuses (2) entsprechend der Bewegungsbahn der Hauptbewegung (Ah) bewegbar ist.
